# EUROPÄISCHE PATENTSCHRIFT

(11) **EP 0 964 234 B1**
(45) Veröffentlichungstag und Bekanntmachung des Hinweises auf die Patenterteilung: **08.10.2003**
(21) Anmeldenummer: 99109343.6
(22) Anmeldetag: 31.05.1999
(51) Int. Cl.: G01L 1/20, G01M 17/007, G01L 5/00, G01L 5/22, G01G 19/414

(54) **Verfahren und Vorrichtung zur Erfassung von Druck- oder Krafteinwirkungen auf eine Oberflächenschicht eines Objektes**
Procedure and device for sensing pressure or force applied to a surface layer of an object
Procédé et dispositif sensible à la pression ou à la force appliquée sur une couche superficielle d'un objet

(30) Priorität: 13.06.1998 DE 19826485
(43) Veröffentlichungstag der Anmeldung: 15.12.1999
(73) Patentinhaber: Volkswagen Aktiengesellschaft, 38436 Wolfsburg (DE)
(72) Erfinder: Bahr, Ulrich, Dr., 38110 Braunschweig (DE)

(56) Entgegenhaltungen:
- EP-A- 0 476 356
- WO-A-97/18450
- DE-A- 19 510 617
- DE-C- 4 237 072
- US-A- 4 795 998

## Beschreibung

Die Erfindung betrifft ein Verfahren zur Erfassung von Druck- oder Krafteinwirkungen auf eine Oberflächenschicht eines Objekts, insbesondere eines Körperteils einer antropomorphen Testpuppe, eines Airbags oder eines Teil eines Kraftfahrzeugs, bei dem die Druck- oder Krafteinwirkung von einer Sensoreinheit erfaßt wird, deren Ausgangssignal zu einer Auswerteeinheit geleitet wird, wobei die Sensoreinheit in der der Oberflächenschicht des Objekts angeordnet oder in die Oberflächenschicht integriert ist und die Ausgangssignale der Sensoreinheit abgefragt werden. Desweiteren betrifft die Erfindung eine hierfür besonders geeignete Vorrichtung, wobei die Sensoreinheit in der Oberflächenschicht des Objekts angeordnet oder in die Oberflächenschicht integriert ist, die Sensoreinheit als matrixartiger Drucksensor ausgebildet ist und die Ausgangssignale der Sensoreinheit abfragt.

Es ist bekannt, auf die Oberfläche des Objekts als Sensoreinheit eine kommerziell erhältliche Meßfolie aufzukleben, die eine matrixartige Anordnung druckempfindlicher Zellen aufweist. Eine derartige Vorgangsweise erlaubt zwar eine orts- und zeitaufgelöste Erfassung des Druck- oder Kraftverlaufs. Sie besitzt jedoch den Nachteil,-daß hierdurch die strukturellen und/oder funktionellen Eigenschaften der Oberfläche des Objekts - wie z. B. deren Reibverhalten - verändert werden, so daß die Gefahr einer Verfälschung der Meßwerte durch die auf die Oberfläche des Testobjekts aufgeklebten Meßfolie besteht.

Im automotiven Bereich, insbesondere bei Sicherheitsversuchen, ist es aber von großer Bedeutung, daß einerseits die auf ein Körperteil einer antopomorphen Testpuppe einwirkende Kraft oder die daraus resultierende Druckverteilung leicht und zuverlässig erfaßbar ist, und daß andererseits durch die Sensoreinheit keine Veränderung der Oberflächeneigenschaften des Testobjekts auftritt. Aus diesem Grund wird bis jetzt bei Sicherheitsversuchen eine druckempfindliche Folie eingesetzt, die ähnlich wie Kohlepapier auf Kraft- oder Druckeinwirkungen reagiert. Eine derartige Vorgangsweise ermöglicht es aber lediglich, den Maximalwert der Druck- oder Krafteinwirkung zu registrieren. Sie erlaubt in nachteiliger Art und Weise jedoch keine zeitliche Auflösung des Drucks- oder Kraftverlaufs, welchem ein gewisses Flächenelement der Oberflächenschicht des Objekts ausgesetzt ist.

Aus der europäischen Patentanmeldung EP 0 476 356 A1 ist eine Sitzbelegungs-Schalteinrichtung für Kraftfahrzeuge bekannt, mit einem auf eine Sitzbelegung ansprechenden Sensor und mit einer zugehörigen Auswerte-Schaltung, die bei einer Sitzbelegung ein Signal abgibt. Dabei ist der Sensor ein im Bereich der Sitzoberfläche angeordnetes, querkraftempfindliches Kabel. Dabei registriert die Auswerte-Schaltung jede Änderung des Sensorausgangssignals als Sitzbelegungs-information.

Die PCT-Anmeldung WO 97/18450 gibt eine Anordnung zur Messung von Kräften an, welche an definierten Orten einer Oberfläche ausgeübt werden. Dabei wird eine zweidimensionale Matrix von Kraftsensoren gebildet, wobei piezoresistives Material Einsatz findet, mit dem Kräfte auf der Matrix erfaßt werden. Mit Hilfe einer Strommessung bei Beaufschlagung der Piezoelemente mit einer Versorgungsspannung kann auf die ausgeübte Kraft rückgeschlossen werden.

Eine weitere Sensoranordnung wird in der Patentschrift US 4,795,998 beschrieben. In einer gewebten Faserstruktur werden elektrische Lejter derart angeordnet, daß sie eine. Matrix bilden. An den Kreuzungspunkten der Leiter verändern sich die elektrischen Widerstände bei Kraftbeaufschlagung. Mit Hilfe eines elektrischen Schaltkreises kann nun der Gesamtwiderstand der Anordnung ermittelt und in Bezug zur ausgeübten Kraft gesetzt werden.

Es ist daher Aufgabe der Erfindung, ein Verfahren und eine Vorrichtung der eingangs genannten Art derart weiterzubilden, daß eine einfache zeit- und/oder ortsauflösende Erfassung von Druck- oder Krafteinwirkungen möglich wird, ohne daß die strukturellen und/oder funktionellen Eigenschaften der Oberflächenschicht des Objekts wesentlich beeinträchtigt werden und eine Vereinfachung der Datenübertragung ermöglicht wird.

Zur Lösung der Aufgabe sieht die Erfindung vor, daß die Ausgangssignale der Sensoreinheit einer in der Oberflächenschicht des Objekts oder im Objekt selbst angeordneten Vorauswerte-Einheit zugeführt werden, die ihrerseits mit der Speicher-/Auswerteeinrichtung verbunden ist. Diese erfindungsgemäße Maßnahme besitzt den Vorteil, daß dadurch in vorteilhafter Art und Weise eine Verminderung der Anzahl der zur Vorauswerte-Einheit führenden Datenkabel und/oder der zu der Speicher/Auswerteeinrichtung übertragenen Datenmenge erzielbar ist

Weitere vorteilhafte Weiterbildungen der Erfindung sind Gegenstand der Unteransprüche

Weitere Einzelheiten und Vorteile der Erfindung sind dem Ausführungsbeispiel zu entnehmen, das im folgenden anhand der Figuren beschrieben wird. Es zeigen:
- Figur 1: ein Ausführungsbeispiel einer Vorrichtung, und
- Figur 2: eine Ausföhrungsform einer Sensoreinheit

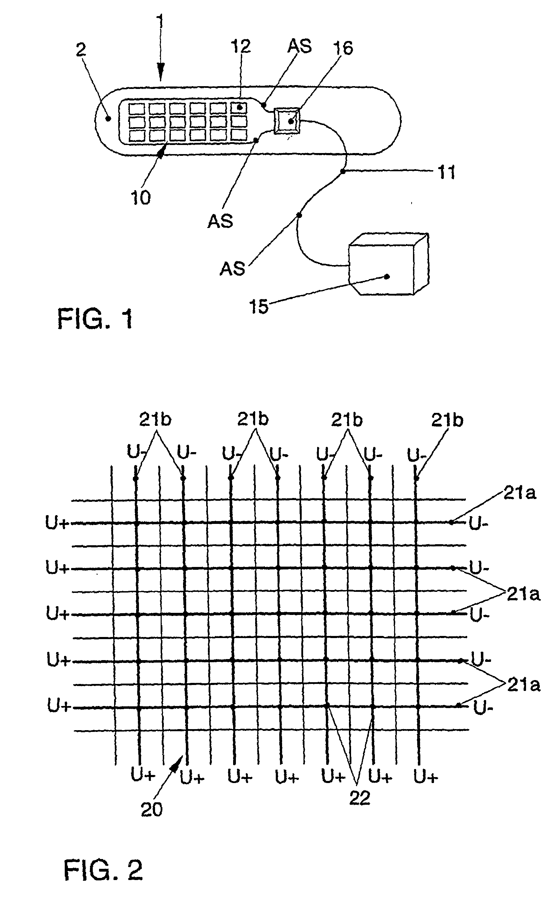

Die in Figur 1 dargestellte Vorrichtung zur zeit- und/oder ortsauflösenden Erfassung von Druck- oder Krafteinwirkungen auf eine Oberflächenschicht 2 eines Objekts 1 weist eine Sensoreinheit 10, die über eine Datenleitung 11 mit einer Speicher-/Auswerteeinnchtung 15 verbunden ist, auf. Das in Figur 1 dargestellte Objekt 1 stellt im hier geschilderten Fall ein Körperteil einer antropomorphen Testpuppe ("Dummy") dar. Es ist dem Fachmann aber aus nachstehender Beschreibung deutlich ersichtlich, daß das nachstehend beschriebene Konstruktionsprinzip und die daraus resultierende Verfahrensweise nicht nur bei Dummies, sondern auch bei einer Vielzahl von anderen Objekten einsetzbar ist.

Für den automotiven Bereich sollen hier - als exemplarische Aufzählung - die Anwendung bei einem Airbag oder für Komponenten des Fahrzeuginnenraums (Amaturentafel, Lenkrad etc.) oder für innere und äußere Strukturteile des Fahrzeugs (A-, B-, C-Säule,Türverkleidung etc.) genannt werden.

Wichtig ist nun, daß - wie in Figur 1 dargestellt - die Sensoreinheit 10 in der Oberflächenschicht 2 des Objekts 1 angeordnet ist. Eine derartige Vorgangsweise besitzt den Vorteil, daß durch die in der Oberflächenschicht 2 angeordnete Sensoreinheit 10 die strukturellen und/oder funktionellen Eigenschaften dieser Oberflächenschicht 2 - wie z. B. deren Reibverhalten - nicht oder nur unwesentlich beeinflußt werden. Dies ist insbesondere bei Sicherheitsversuchen mit antropomorphen Testpuppen von Bedeutung.

Als die in der Oberflächenschicht 2 angeordnete, vorzugsweise darin integrierte Sensoreinheit 10 kann eine kommerziell erhältliche Meßfolie verwendet werden, die eine matrixartige Anordnung druckempfindlicher Sensorelemente 12 aufweist. Die an definierten räumlichen Positionen angeordneten Sensorelemente 12 der Sensoreinheit 10 erlauben dann eine Ortsauflösung der Druck- oder Krafteinwirkung. Der zeitliche Verlauf der von den einzelnen Sensorelementen 12 erzeugten elektromagnetischen Ausgangssignale AS repräsentiert dann den zeitlichen Druck- oder Kraftverlauf, so daß auch eine Zeitauflösung des Druck- oder Kraftverlaufs ermöglicht wird.

Dem Fachmann ist klar ersichtlich, daß er grundsätzlich jede Sensoreinheit 10, die sich in der Oberflächenschicht 2 anordnen läßt, wie z. B. die oben beschriebene Meßfolie, verwenden kann. Es wird jedoch bevorzugt, daß in vorteilhafter Art und Weise die Sensoreinheit 10 direkt in die Oberflächenschicht 2 des Objekts 1 integriert ist.

Im Falle einer aus einem Gewebe 20 bestehenden Oberflächenschicht 2 kann - wie aus Figur 2 ersichtlich ist - vorgesehen sein, daß in das Gewebe 20 der Oberflächenschicht 2 ein Raster von leitfähigen Fasern 21a, 21b eingewebt werden, die an ihren Kreuzungspunkten 22 übereinanderliegen, so daß sich eine ortsauflösende Anordnung ergibt. Als leitfähige Fasern 21a, 21b kommen insbesondere halbleitende Fasem wie Kohlefasern oder Polymerfasern in Betracht. Die Kraft- oder Druckbeaufschlagung bewirkt, daß sich der Kontaktwiderstand zwischen den sich kreuzenden Längsfasern 21a und Querfasern 21b ändert, so daß nur durch eine Änderung im elektromagnetischen Ausgangssignal AS der an ihren Enden mit einer Potentialdifferenz U+,Uspannungsbeaufschtagten Fasern 21a, 21b bewirkt wird.

Vorzugsweise ist vorgesehen, daß in der Oberflächenschicht 2 oder im Objekt 1 eine Vorauswerteeinheit 16 angeordnet ist, der die Ausgangssignale AS der Sensoreinheit 10 zugeführt werden. Die Vorauswerteeinheit 16 ist ihrerseits wiederum über die Datenleitung 11 mit der Speicher-/Auswerteeinrichtung 15 verbunden. Eine derartige Vorgangsweise besitzt den Vorteil, daß hierdurch eine Reduktion der zur Speicher-/Auswerteeinrichtung 15 führenden Datenkabel 11 und/oder der zu dieser Einrichtung 15 übertragenen Datenmenge erzielbar ist: Die Reduktion der zur Speicher-/Auswerteeinrichtung 15 führenden Datenkabel 11 wird dadurch erreicht, daß die Vorauswerteeinheit 16 die Sensoren 12 der Sensoreinheit 10 multiplexartig abfragt und die Ausgangssignale AS der einzelnen Sensoren 12 entsprechend codiert zur Speicher-/Auswerteeinrichtung 15 geleitet werden. Der zweitgenannte Fall wird dadurch erreicht, daß in der Vorauswerteeinrichtung 15 bereits nicht relevante Daten erkannt und nicht mehr zur Speicher-/Auswerteeinrichtung weitergeleitet werden.

## Patentansprüche

1. Verfahren zur Erfassung von Druck- oder Krafteinwirkungen auf eine Oberflächenschicht (2) eines Objektes (1), insbesondere eines Körperteils einer antropomorphen Testpuppe, eines Airbags oder eines Teils eines Kraftfahrzeuges, bei dem die Druck- oder Krafteinwirkung von einer Sensoreinheit (10) erfaßt wird, deren Ausgangssignal (AS) zu einer Speicher-/Auswerteeinrichtung (15) geleitet wird, wobei die Sensoreinheit (10) in der Oberflächenschicht (2) des Objekts (1) angeordnet oder in die Oberflächenschicht integriert ist, die Sensoreinheit (10) als matrixartiger Drucksensor ausgebildet ist, wobei eine Vorauswerteeinheit (16) mit der Speicher-/Auswerteeinrichtung (15) über ein Datenkabel (11) verbunden ist und die Ausgangssignale (AS) der Sensoreinheit (10) multiplexartig abfragt,
**dadurch gekennzeichnet, dass**
die Vorauswerteeinheit (16) im Objekt oder in der Oberflächenschicht (2) des Objektes (1) angeordnet ist.

2. Verfahren nach Anspruch 1, **dadurch gekennzeichnet, daß** durch die Vorauswerteeinheit (16) für das Meßergebnis nicht relevante Ausgangssignale (AS) der Sensoreinheit (10) unterdrückt werden.

3. Verfahren nach Anspruch 1 oder 2, **dadurch gekennzeichnet, daß** als matrixartige Sensoreinheit (10) eine Vielzahl von Drucksensoren (12) verwendet werden.

4. Verfahren nach Anspruch 1 oder 2, **dadurch gekennzeichnet, dass** als Sensoreinheit (10) ein Raster von leitfähigen Fäden (21a, 21b) verwendet wird, die an Kreuzungspunkten (22) übereinanderliegend angeordnet werden.

5. Vorrichtung zur Erfassung von Druck- oder Krafteinwirkungen auf eine Oberflächenschicht (2) eines Objekts (1), die eine Sensoreinheit (10) aufweist, deren Ausgangssignale zu einer Speicher-/Auswerteeinrichtung (15) leitbar sind, wobei die Sensoreinheit (10) in der Oberflächenschicht (2) des Objektes (1) angeordnet oder in die Oberflächenschicht (2) integriert ist, die Sensoreinheit (10) als matrixartiger Drucksensor ausgebildet ist, wobei eine Vorauswerteeinheit (16) mit der Speicher-/ Auswerteeinrichtung (15) über ein Datenkabel (11) verbunden ist und die Ausgangssignale (AS) der Sensoreinheit (10) multiplexartig von der Vorauswerteeinheit (16) abfragbar sind,
**dadurch gekennzeichnet, dass**
die Vorauswerteeinheit (16) im Objekt oder in der Oberflächenschicht (2) des Objekts (1) angeordnet ist.

6. Vorrichtung nach Anspruch 5, **dadurch gekennzeichnet, dass** die Sensoreinheit (10) als eine Messfolie mit matrixartig angeordneten Drucksensoren (12) ausgebildet ist.

7. Vorrichtung nach Anspruch 5, **dadurch gekennzeichnet, dass** die Sensoreinheit (10) als ein matrixartig ausgebildetes Raster von leitfähigen Fäden (21a, 21b) ausgebildet ist.

8. Vorrichtung nach Anspruch 7, **dadurch gekennzeichnet, dass** die leitfähigen Fäden (21 a, 21 b) als halbleitende Kohlefasern oder halbleitende Polymerfasern ausgebildet sind.

## Claims

1. Method for sensing pressure or force effects on a surface layer (2) of an object (1), in particular of a body part of an anthropomorphous test dummy, an airbag or a part of a motor vehicle, in which the pressure or force effect is sensed by a sensor unit (10) whose output signal (AS) is conducted to a storage/evaluation device (15), the sensor unit (10) being arranged in the surface layer (2) of the object (1) or integrated into the surface layer and the sensor unit (10) being embodied as a matrix-like pressure sensor, a pre-evaluation unit (16) being connected to the storage/evaluation device (15) via a data cable (11) and interrogating the output signals (AS) of the sensor unit (10) in a multiplex-like fashion, **characterized in that** the pre-evaluation unit (16) is arranged in the object or in the surface layer (2) of the object (1).

2. Method according to Claim 1, **characterized in that** the pre-evaluation unit (16) suppresses output signals (AS) of the sensor unit (10) which are not relevant to the measurement result.

3. Method according to Claim 1 or 2, **characterized in that** a multiplicity of pressure sensors (12) are used as the matrix-like sensor unit (10).

4. Method according to Claim 1 or 2, **characterized in that** a grid of conductive threads (21a, 21b) which are arranged one on top of the other at points (22) of intersection is used as the sensor unit (10).

5. Device for sensing pressure or force effects on a surface layer (2) of an object (1) which has a sensor unit (10) whose output signals can be conducted to a storage/evaluation device (15), the sensor unit (10) being arranged in the surface layer (2) of the object (1) or integrated into the surface layer (2), the sensor unit (10) being embodied as a matrix-like pressure sensor, a pre-evaluation unit (16) being connected to the storage/evaluation device (15) via a data cable (11) and the output signals (AS) of the sensor unit (10) being capable of being interrogated in a multiplex-like fashion by the pre-evaluation unit (16), **characterized in that** the pre-evaluation unit (16) is arranged in the object or in the surface layer (2) of the object (1).

6. Device according to Claim 5, **characterized in that** the sensor unit (10) is embodied as a measurement film with pressure sensors (12) arranged in the manner of a matrix.

7. Device according to Claim 5, **characterized in that** the sensor unit (10) is embodied as a grid of conductive threads (21a, 21b) which are embodied in the manner of a matrix.

8. Device according to Claim 7, **characterized in that** the conductive threads (21a, 21b) are embodied as semiconductive carbon fibres or semiconductive polymer fibres.

## Revendications

1. Procédé sensible à la pression ou à la force appliquée sur une couche superficielle (2) d'un objet (1) , plus précisément une partie du corps d'un mannequin d'essai anthropomorphe, d'un coussin gonflable de sécurité ou d'une partie d'un véhicule, avec lequel l'effet de la pression ou de la force est détecté par un module de détection (10) dont le signal de sortie (AS) est acheminé à un dispositif de mémorisation / d'analyse (15), le module de détection (10) étant disposé dans la couche superficielle (2) de l'objet (1) ou intégré dans la couche superficielle, le module de détection (10) étant réalisé sous la forme d'un capteur de pression de type matriciel, un module de pré-analyse (16) étant relié au dispositif de mémorisation / d'analyse (15) par le biais d'un câble de données (11) et interrogeant les signaux de sortie (AS) du module de détection (10) à la manière d'un multiplexeur, **caractérisé en ce que** le module de pré-analyse (16) est disposé dans l'objet ou dans la couche superficielle (2) de l'objet (1).

2. Procédé selon la revendication 1, **caractérisé en ce que** le module de pré-analyse (16) supprime les signaux de sortie (AS) du module de détection (10) qui sont sans importance pour le résultat de la mesure.

3. Procédé selon la revendication 1 ou 2, **caractérisé en ce qu'**une pluralité de capteurs de pression (12) est utilisée en tant que module de détection (10) de type matriciel.

4. Procédé selon la revendication 1 ou 2, **caractérisé en ce qu'**une grille de fils conducteurs (21a, 21b) est utilisée comme module de détection (10), lesquels sont superposés au niveau des points d'intersection (22).

5. Dispositif sensible à la pression ou à la force appliquée sur une couche superficielle (2) d'un objet (1), qui comprend un module de détection (10) dont les signaux de sortie peuvent être acheminés à un dispositif de mémorisation / d'analyse (15), le module de détection (10) étant disposé dans la couche superficielle (2) de l'objet (1) ou intégré dans la couche superficielle (2), le module de détection (10) étant réalisé sous la forme d'un capteur de pression de type matriciel, un module de pré-analyse (16) étant relié au dispositif de mémorisation / d'analyse (15) par le biais d'un câble de données (11) et les signaux de sortie (AS) du module de détection (10) pouvant être interrogés à la manière d'un multiplexeur par le module de pré-analyse (16), **caractérisé en ce que** le module de pré-analyse (16) est disposé dans l'objet ou dans la couche superficielle (2) de l'objet (1).

6. Dispositif selon la revendication 5, **caractérisé en ce que** le module de détection (10) est réalisé sous la forme d'un film de mesure comportant des capteurs de pression (12) disposés à la manière d'une matrice.

7. Dispositif selon la revendication 5, **caractérisé en ce que** le module de détection (10) est réalisé sous la forme d'une grille de fils conducteurs (21a, 21b) ayant une configuration de type matrice.

8. Dispositif selon la revendication 7, **caractérisé en ce que** les fils conducteurs (21a, 21b) sont réalisés sous la forme de fibres de carbone semiconductrices ou de fibres de polymère semiconductrices.
